# EUROPÄISCHE PATENTSCHRIFT

(11) **EP 3 724 427 B1**
(45) Veröffentlichungstag und Bekanntmachung des Hinweises auf die Patenterteilung: **10.11.2021**
(21) Anmeldenummer: 18819064.9
(22) Anmeldetag: 10.12.2018
(51) Int. Cl.: E05B 67/00, E05B 71/00, E05B 73/00, E05B 45/00

(54) **SICHERUNGSSEIL ZUR SICHERUNG VON BEWEGLICHEN GEGENSTÄNDEN**
SECURING CABLE FOR SECURING MOVABLE OBJECTS
CÂBLE DE SÉCURITÉ POUR LA SÉCURISATION D'OBJETS MOBILES

(30) Priorität: 14.12.2017 DE 102017129894
(43) Veröffentlichungstag der Anmeldung: 21.10.2020
(73) Patentinhaber: Texlock GmbH, 04178 Leipzig (DE)
(72) Erfinder: BAUM, Alexandra, 04177 Leipzig (DE); BRAND, Suse, 04275 Leipzig (DE)
(74) Vertreter: Maikowski & Ninnemann Patentanwälte Partnerschaft mbB
(86) Internationale Anmeldenummer: PCT/EP2018/084108
(87) Internationale Veröffentlichungsnummer: WO 2019/115430

(56) Entgegenhaltungen:
- EP-A1- 0 707 124
- WO-A2-2016/173716
- DE-U1-202013 103 129
- US-A- 5 706 679
- US-B1- 9 243 428

## Beschreibung

### Gebiet der Erfindung

Die Erfindung betrifft ein Sicherungsseil umfassend drei, vier oder mehr Geflechte, Gewebe oder Gelege aus Fasern oder Garnen, die übereinander angeordnet sind, wobei das Sicherungsseil eine Kette aufweist.

### Hintergrund der Erfindung

Sicherungsseile bzw. Sicherungsstränge werden in der Praxis beispielsweise bei Kabelschlössern für Zweirad-Fahrzeuge verwendet. Der Sicherungsstrang wird dabei meist durch ein Kernseil aus Metalldraht gebildet, das zum Schutz gegen Witterungseinflüsse zusätzlich mit einer Kunststoffhülle ummantelt ist. An den beiden freien Enden eines solchen Sicherungsstranges sind die miteinander zu verriegelnden Schlossteile angebracht. Diese Sicherungsstränge werden bei Zweirad-Schlössern deshalb verwendet, da sie zum einen eine relativ hohe Zugfestigkeit bei geringem Herstellungsaufwand bzw. Herstellungskosten besitzen und somit einen verhältnismäßig guten Diebstahlschutz bei dem Versuch bieten, das Schloss durch Auseinanderziehen der miteinander verriegelten Schlossteile aufzubrechen. Zum anderen sind sie flexibel und lassen sich deshalb leicht an die unterschiedlichsten Gegebenheiten anpassen. Das Drahtseil springt jedoch immer wieder in seine ursprünglich ungebogene Form zurück. Soll der Diebstahlschutz bei derartigen Sicherungssträngen verbessert werden, so bietet sich beispielsweise an, die Stärke (Dicke) des Kernseils zu erhöhen. Dadurch verliert der Sicherungsstrang aber zunehmend seine Flexibilität, bis er nahezu starr ist. Wird dagegen für sämtliche Seiladern bzw. Seillitzen hochwertiges Material verwendet, um eine Querschnittsvergrößerung zu vermeiden und dadurch die Flexibilität zu wahren, erhöhen sich die Herstellungskosten erheblich. Im einfachsten Fall ist das Kernseil in der Regel nur durch eine einfache Kunststoffhülle geschützt und somit für den Angriff mittels Eisensäge oder Bolzenschneider relativ leicht zugänglich. Solche vorbekannten Sicherungsstränge bieten nach einer Beschädigung oder Zerstörung des Kernseils keinen weiteren Diebstahlschutz. Der Diebstahlsicherheit derartiger Sicherungsstränge sind deshalb Grenzen gesetzt.

DE 93 00 319.6 U1 offenbart einen kabelförmigen, flexiblen Sicherungsstrang insbesondere zur Sicherung von Zweiradfahrzeugen, dadurch gekennzeichnet, dass das bei Kabelschlössern übliche Stahlseil durch eine Kombination von verflochtenen synthetischen Fasern ersetzt wird. Ein grob und locker geflochtener Strang aus Aramidfasern, dem einige Edelstahldrähte beigefügt sind, die ebenfalls in den Kern miteingeflochten werden dient als Kernseil. Dieses Kernseil wird mit einer Polyesterfaser ummantelt und bildet ein Hohlseil.

Ebenso offenbart DE 29512550 U1 einen Kabel- bzw. schlauchförmigen, flexiblen Sicherungsstrang zur Sicherung von beweglichen Gegenständen bei dem das bei Kabelschlössern übliche Stahlseil durch eine Kombination von synthetischen Fasern ersetzt wird in Verbindung mit einer Kombination von metallischen und nicht-metallischen Werkstoffen, die diese Fasern durchsetzen oder auch nur ummanteln oder beides, sowie polymeren bzw. Gummi-Werkstoffen als Ummantelung oder Umhüllung der zuvor beschriebenen Werkstoffe bzw. Werkstoffkombinationen eingesetzt werden.

Der in DE 93 00 319.6 U1 und in DE 29512550 U1 beschriebene Aufbau bietet zwar einen verbesserten Schutz gegen Sägen, Bolzenschneider, Zerreißen oder Diamantwerkzeuge, jedoch keine verbesserte Schnittfestigkeit. Mit einem scharfen Messer können solche Sicherungsstränge leichter durchtrennt werden als herkömmliche Kabelschlösser mit Stahlseilkern.

DE 20 2008 015 885 U1 offenbart ein flexibles Fahrradschloss, das aus mehreren modifizierten, einseitigen Kettengliedern mit Ösen an beiden Enden besteht, welche mittels Füge-Prozess zusammengefügt sind sowie dass zwischen den einseitigen Kettengliedern jeweils ein normales kurzes, zweiseitiges Kettenglied angeordnet ist und das an den Enden der Kette normale Kettenglieder zum Einhängen eines Vorhängeschlosses aufweist. Das Schloss kann mit Plastik, Gummi usw. umhüllt sein. Ein derartiger Aufbau zeigt zwar eine erhöhte Schnittfestigkeit, jedoch dient die Umhüllung der Kettenglieder mit Plastik oder Gummi lediglich dazu, Beschädigungen an den zu sichernden Gegenständen oder Verletzungen des Benutzers, die durch die Kettenglieder hervorgerufen werden können, zu vermeiden. Ein derartiger Aufbau bietet keinen verbesserten Schutz, beispielsweise gegen Sägen, Bolzenschneider, Zerreißen oder Diamantwerkzeuge.

Die DE 20 2013103129 U1 offenbart ein Zweiradschloss mit einer Hülle und einem Schließelement, welches in der Regel aus einer Metallkette oder einem Metallkabel besteht. Die Hülle dient einerseits dem Schutz der zu sichernden Gegenstände vor Beschädigungen, anderseits der Erhöhung der Verkehrssicherheit für das Zweirad und gegebenenfalls für den Fahrer des Zweirads. Dazu umfasst die Hülle eine Licht reflektierende und/oder fluoreszierende Beschichtung. Durch diese Ausgestaltung wird erreicht, dass auf das Zweiradschloss auftretende Strahlung reflektiert wird und/oder Fluoreszenz ausgelöst wird, sodass das Zweirad durch die Hülle des Zweiradschlosses eine zusätzliche Sicherheitsfunktion erhält. Zu einer Erhöhung der Diebstahlsicherheit trägt diese Hülle nicht bei.

WO 2016/173716 A2 offenbart ein Sicherungsseil gemäß dem Oberbegriff des Anspruchs 1 mit zumindest drei übereinander angeordneten Gelegen, Geflechten oder Geweben aus Fasern oder Garnen.

### Beschreibung der Erfindung

Verbesserte Diebstahlsicherheit bedeutet, dass das Sicherungsseil einem Aufbruchversuch über eine hinreichend lange Zeit standhält. Unter "hinreichend langer Zeit" ist eine Zeitperiode zu verstehen, die ein Dieb für das Aufknacken oder Zerstören eines Schlosses beim Diebstahl noch für hinnehmbar ansieht. Herkömmliche Sicherungseinrichtungen, wie beispielsweise Fahrradschlösser, können prinzipiell auf verschiedene Arten und mit verschiedensten Hilfsmitteln zerstört werden: durch Aufsägen, Zertrennen mittels Bolzenschneider, Trennschleifer oder Diamantwerkzeugen, durch Zerschneiden mittels scharfer Klingen, durch Zerreißen oder durch Einwirkung von Hitze (beispielsweise mittels Feuer, Gasbrenner o. ä.) oder Kälte. Lokal starke Unterkühlung mittels eines Kältemittels (beispielsweise flüssigem Helium, flüssigem Stickstoff oder flüssigem Sauerstoff) führt dazu, dass herkömmliche Materialien, wie beispielsweise Stahl, spröde werden und durch ein paar Hammerschläge gebrochen werden können. Hält die Sicherungseinrichtung den Aufbrauchversuchen jedoch über eine hinreichend lange Zeit stand, muss ein Dieb befürchten, ertappt zu werden. Es dürfte daher in den meisten Fällen ausreichen, wenn das Sicherungsseil Aufbruchversuchen einige Minuten standhält.

Die Aufgabe der Erfindung besteht daher darin, ein Sicherungsseil bzw. einen Sicherungsstrang bereitzustellen, das bzw. der bei genügender Flexibilität ein geringes Gewicht und eine verbesserte Diebstahlsicherheit aufweist.

Die Aufgabe der Erfindung wird gelöst durch ein Sicherungsseil zur Sicherung von Gegenständen, wobei
- das Sicherungsseil drei, vier oder mehr Gelege, Geflechte oder Gewebe aus Fasern oder Garnen aufweist,
- die Geflechte oder Gewebe übereinander angeordnet sind,
dadurch gekennzeichnet, dass
- das Sicherungsseil als Kern eine Kette aufweist.

Dieser Aufbau des erfindungsgemäßen Sicherungsseils gewährleistet sowohl einen verbesserten Schutz gegen mechanische Einwirkung, wie Sägen, Bolzenschneider, Zerreißen oder von Diamantwerkzeugen durch das Vorhandensein der drei, vier oder mehr Geflechte oder Gewebe aus Fasern oder Garnen, als auch eine verbesserte Schnittfestigkeit gegenüber scharfkantigen Gegenständen, wie beispielsweise Messern, durch das Vorhandensein der Kette. Die Auswahl der Materialien, die für die Herstellung der Gelege, Geflechte oder Gewebe genutzt werden, ermöglicht außerdem einen effektiven Schutz gegen Einwirkung von Hitze und Kälte.

Als Gelege wird im Sinne der Erfindung ein textiles Flächengebilde verstanden, das aus einer oder mehreren Lagen von parallel verlaufenden, gestreckten Fäden besteht. An den Kreuzungspunkten werden die Fäden üblicherweise fixiert. Die Fixierung erfolgt entweder durch Stoffschluss oder mechanisch durch Reibung und/oder Formschluss. Gelege können einlagig oder mehrlagig ausgebildet sein. Die Fadenlagen bei mehrlagigen Gelegen können alle unterschiedliche Orientierungen aufweisen, auch aus unterschiedlichen Fadendichten und unterschiedlichen Fadenfeinheiten bestehen. Im Gegensatz zu Geweben haben Gelege als Verstärkungsstrukturen in Faser-Kunststoff-Verbunden bessere mechanische Eigenschaften, da die Fäden in gestreckter Form vorliegen und damit keine zusätzliche Strukturdehnung vorliegt und die Ausrichtung der Fäden speziell für den jeweiligen Anwendungsfall definiert werden kann.

Typischerweise sind die Gelege zur Verwendung in dem erfindungsgemäßen Sicherungsseil parallel ausgerichtet oder strangförmig ausgebildet.

Geflechte bestehen aus mehreren regelmäßig ineinandergeschlungenen Strängen, wie Fasern, Garn, Metalldrähten usw..

Typischerweise sind die Geflechte zur Verwendung in dem erfindungsgemäßen Sicherungsseil als schlauchförmige Schicht ausgebildet.

Gewebe sind manuell oder maschinell gefertigte textile Flächengebilde aus mindestens zwei rechtwinklig oder nahezu rechtwinklig verkreuzten Fadensystemen, den Kettfäden in der Längsrichtung und Schussfäden in der Querrichtung, die durch Fadenverkreuzung verbunden sind. Die meisten Gewebe sind einlagige Gewebe mit jeweils nur einem Kett- und einem Schussfadensystem. Werden mehrere Kett- oder Schussfadensysteme verwendet, entstehen verstärkte Gewebe. Geeignet für die Erfindung ist auch der Einsatz von verstärkten Geweben, die beispielsweise ausgewählt sind aus Schussdouble (enthaltend zwei Schussfadensysteme, ein Kettfadensystem), Kettdouble (ein Schussfadensystem, zwei Kettfadensysteme), Doppelgewebe (zwei Kett- und zwei Schussfadensysteme). Typische Doppelgewebe sind Pique, Côtelé, Kalmuck und Matelassé. Doppelgewebe bestehen aus zwei miteinander auf unterschiedliche Weise verwobenen Geweben.

Typischerweise sind die Gewebe zur Verwendung in dem erfindungsgemäßen Sicherungsseil schlauchförmig ausgebildet.

Vorzugsweise weist das erfindungsgemäße Sicherungsseil 3, 4, 5, 6, 7, 8, 9 oder 10, mehr bevorzugt 3, 4, 5 oder 6, besonders bevorzugt 3, 4 oder 5 Gelege, Geflechte oder Gewebe aus Fasern oder Garnen auf, die hüllenförmig oder schlauchförmig in Schichten bzw. Lagen übereinander angeordnet sind, wobei eine Kette den Kern des Sicherungsseils bildet.

Die Gelege, Geflechte oder Gewebe können jeweils als Schlauch vorgefertigt werden und dann über der Kette bzw. der jeweils vorherigen Schicht angeordnet werden. Eine andere Möglichkeit besteht darin, flächige Gelege, Geflechte oder Gewebe bereitzustellen, die dann um die Kette bzw. die jeweils vorherige Schicht gewickelt werden. Besonders bevorzugt ist hierbei vorgesehen, dass die übereinanderliegenden Schichten bzw. Lagen mit Wechsel der Wicklungsrichtung von einer Lage zur nächstfolgenden Lage angeordnet werden. Dies erhöht die Widerstandsfähigkeit des Seils gegen Sägen, Bolzenschneider, Zerreißen oder Diamantwerkzeuge. Auch eine Kombination von schlauchförmig vorgefertigten Schichten und gewickelten Schichten ist denkbar.

Eine Erhöhung der Diebstahlsicherheit des erfindungsgemäßen Sicherungsseils wird insbesondere dadurch erreicht, dass die Kette des Sicherungsseils zusätzlich zu den Gelegen, Geflechten oder Geweben von Multifilamenten oder Garnen oder Zwirnen umgeben ist. Vorzugsweise sind die Multifilamente oder Garne oder Zwirne direkt um die Kette herum angeordnet, unterhalb bzw. innerhalb der schlauchförmig angeordneten Gelege, Geflechte oder Gewebe. Diese Anordnung verhindert effizient die Wirkung einer Säge, eines Bolzenschneiders oder von Diamantwerkzeugen und erhöht die Widerstandsfähigkeit des Sicherungsseils gegen Zerreißen.

Unter Filament versteht der Fachmann eine Faser mit beliebiger Länge. Multifilamente enthalten mehrere bis viele nebeneinanderliegende Filamente, beispielsweise 2 bis 1000, 10 bis 900, 20 bis 800 oder 30 bis 700, vorzugsweise 40 bis 600 oder 50 bis 500 nebeneinanderliegende Filamente.

Garn ist ein linienförmiges textiles Gebilde aus einer oder mehreren Fasern. Es ist ein textiles Zwischenprodukt, welches beispielsweise zu Gelegen, Geflechte oder Geweben verarbeitet werden kann. Unter Zwirn wird ein Faden (linienförmige Textilie) verstanden, der aus mehreren zusammengedrehten Garnen bzw. Garnfäden besteht. Ein Zwirn kann eine wesentlich höhere Reißfestigkeit haben als die nicht verzwirnten Einfach-Garne zusammen.

In einer bevorzugten Ausführungsform der Erfindung ist die Kette von Multifilamenten umgeben. In einer weiteren bevorzugten Ausführungsform ist die Kette von Garnen umgeben. In einer weiteren bevorzugten Ausführungsform ist die Kette von Zwirnen umgeben. Es ist weiterhin besonders bevorzugt, wenn die die Kette umgebenden Multifilamente, Garne oder Zwirne nicht straff, sondern lose um die Kette herum angeordnet sind. Dieser Aufbau des erfindungsgemäßen Sicherungsseils ist besonders widerstandsfähig gegen Sägen oder Reißen. Die Zähne eines Sägeblatts verhaken sich in den Multifilamenten, Garnen oder Zwirnen und ziehen diese mit sich, ohne sie zu durchtrennen. Dieser Effekt wird noch dadurch unterstützt, wenn Fasern aus denen die Multifilamente, Garne oder Zwirne bestehen, nicht aus einem spröden Material, dass bei Belastung durch Reißen oder durch Zugkräfte einfach bricht, sondern einem elastischen Material bestehen. Vorzugsweise bestehen die Multifilamente, Garne oder Zwirne aus Chemiefasern, Gemischen verschiedener Chemiefasern oder Gemischen aus Chemiefasern und Naturfasern, die nachfolgend beschrieben werden.

Wie zuvor beschrieben, resultiert der Aufbau des erfindungsgemäßen Sicherungsseils in einer verbesserten Diebstahlsicherheit. Damit verbunden weist das erfindungsgemäße Sicherungsseil auch eine erhöhte Reißfestigkeit und eine erhöhte Zugfestigkeit auf. Damit eröffnen sich, neben der Sicherung von beweglichen Gegenständen gegen Diebstahl, weitere Anwendungsmöglichkeiten für das Sicherungsseil, beispielsweise in der Seefahrt, im Vermessungs-, Bau- und Transportwesen, als Bestandteile von Maschinen wie Kränen, Lastenaufzügen, Flaschenzügen usw. sowie beim Klettersport, Tauziehen, im Absperr- und Abschleppwesen usw.

Je nach Anwendungszweck sind die Maße, wie Durchmesser, Umfang, Schichtdicke der einzelnen Bestandteile bzw. Schichten des erfindungsgemäßen Sicherungsseils unterschiedlich ausgeführt.

Die im Kern des Sicherungsseils um die Kette angeordneten Multifilamente, Garne oder Zwirne bilden eine schlauchförmige Schicht, deren Durchmesser im Bereich von > 3 mm bis 50 mm beträgt. Für Anwendungen im Bereich der Diebstahlsicherung oder im Sportbereich, wie beispielsweise beim Klettern, beträgt der Durchmesser dieser Schicht vorzugsweise > 3 mm bis 10 mm, besonders bevorzugt > 3 mm bis 8 mm oder > 3 mm bis 5 mm. "> 3 mm" bedeutet in diesem Zusammenhang, dass der Durchmesser dieser Schicht wenigstes geringfügig größer als der Durchmesser der Kette ist, wie beispielsweise 3,1 mm, 3,2 mm, 3,3 mm, 3,4 mm, 3,5 mm, usw.

Für Anwendungen in Bereichen mit hoher Zugbelastung, wie beispielsweise im Bauwesen, Transportwesen, Abschleppwesen usw. ist das erfindungsgemäße Sicherungsseil entsprechend größer, d.h. stärker und auch länger dimensioniert. Der Durchmesser der um die Kette angeordneten schlauchförmigen Schicht aus Multifilamenten, Garnen oder Zwirnen liegt dann vorzugsweise im Bereich von 5 mm bis > 30 mm, 10 mm bis > 30 mm, 15 mm bis > 30 mm besonders bevorzugt 20 mm bis > 30 mm oder 25 mm bis > 30 mm. "> 30 mm" bedeutet in diesem Zusammenhang, dass der Durchmesser dieser Schicht wenigstes geringfügig größer als der Durchmesser der Kette ist, wie beispielsweise 31 mm, 32 mm, 33 mm, 34 mm, 35 mm, usw.

Als "Durchmesser" im Sinne der Erfindung ist der Außendurchmesser der jeweiligen hüllen- oder schlauchförmigen Schicht definiert.

In Bezug auf die Materialart der Fasern oder Garne gilt ähnliches die Gelege, Geflechte oder Gewebe, aus denen die hüllen- bzw. schlauchförmigen Schichten des erfindungsgemäßen Sicherungsseils bestehen.

Die Fasern oder Garne für die Ausbildung der Gelege, Geflechte und/oder Gewebe sind vorzugsweise ausgewählt aus Chemiefasern und Naturfasern oder daraus bestehenden Garnen.

Bevorzugte Chemiefasern für die Verwendung in den einzelnen Schichten des erfindungsgemäßen Sicherungsseils sind ausgewählt aus Fasern aus natürlichen Polymeren, Fasern aus synthetischen Polymeren, Fasern aus anorganischen Stoffen und Metallfasern.

In einer Ausführungsform der Erfindung sind die Fasern aus natürlichen Polymeren ausgewählt aus Fasern aus regenerierter Cellulose, wie Viskose, Modal, Lycocell und Cupro; Fasern aus Celluloseestern, wie Acetat-Fasern und Triacetatfasern; Proteinfasern, wie regenerierte Proteinfasern, modifizierte Sojabohnenproteinfasern, Zeinfasern, Caseinfasern und künstliche Spinnenfasern; Polylactidfasern, Alginatfasern, Chitinfasern, Elastodienfasern, und biobasierten Polymidfasern.

In einer weiteren Ausführungsform der Erfindung sind die Fasern aus synthetischen Polymeren ausgewählt aus Fasern aus Polyester, wie zum Beispiel Polyethylenterephthalat (PET), Polytrimethylenterephthalat (PTT) und Polybutylenterephthalat (PBT); Polyamid (PA), Polyimid, Polyamidimid, Aramid, Polyacryl, Modacryl, Polytetrafluorethylen (PTFE), Polyethylen (PE), Polypropylen (PP, Polychlorid, Elasthan, Polybenzoxazol, Polybenzimidazol, Polyharnstoff, Melamin, Polyphenylensulfid, Trivynil, Elastolefin, Elastomultiester, Polyvinylalkohol, Vinylal, Polycarbonat; und Polystyrol.

In einer weiteren Ausführungsform der Erfindung sind die Fasern aus anorganischen Stoffen ausgewählt aus Keramikfasern, Quarzfasern, Glasfasern, Basaltfasern, Kohlenstofffasern, Borfasern, Kristallfasern, Schlackenfasern und Nanotubefasern.

In einer weiteren Ausführungsform der Erfindung sind die Fasern oder Garne ausgewählt aus Polyesterfasern (PES), Aramidfasern, Glasfasern und Fasern aus hochmodularem Polyethylen (HMPE).

Besonders bevorzugt ist es, wenn die Gelege, Geflechte und/oder Gewebe Mischungen oder Kombinationen der zuvor beschriebenen Fasern oder Garne enthalten.

PES Fasern haben mehrere Vorteile im Zusammenhang mit dem erfindungsgemäßen Sicherungsseil. Sie sind besonders licht- und wetterbeständig und damit widerstandsfähig gegen klimatische Einflüsse. Polyester-Fasern können auch dort eingesetzt werden, wo es vor allem um Leichtigkeit und Feinheit geht. Polyester-Fasern eignen sich sehr gut für Mischungen mit Naturfasern. Gewebe aus Polyester-Fasern oder Mischungen mit einem entsprechend hohen Anteil besitzen eine geringe Knitterneigung und behalten ihre Formbeständigkeit auch bei Einwirkung von Feuchtigkeit. Polyester-Fasern verfügen über ein gutes Feuchtetransportvermögen und trocknen schnell. Sie sind pflegeleicht. Sie verfügen über eine hohe Festigkeit, was in einer überdurchschnittlichen Strapazierfähigkeit resultiert.

Geeignete Chemiefasern für Fasermischungen sind neben PES auch Polyamid, Polyurethan und Elasthan.

Polyamid ist sehr elastisch und knittert wenig.

Polyacrylfasern sind sehr bauschig und haben einen wollähnlichen Charakter. Das Material knittert kaum, lässt sich (wie Polyester) bei der Herstellung gut einfärben, ist elastisch und weich. Vor allem wegen seines elastischen und wollähnlichen Charakters bieten Gelege, Geflechte und/oder Gewebe, die Fasermischungen enthalten, in denen Polyacrylfasern enthalten sind, einen erhöhten Schutz gegen die Einwirkung einer Säge oder eines Bolzenschneiders. Diese Fasergemische sind aufgrund Ihrer Elastizität besonders reißfest bzw. "weichen" den Schneiden eines Bolzenschneiders gewissermaßen aus.

Polyurethan ist ebenfalls eine stark elastische Faser. Polyurethan wird normalerweise nicht rein verwendet, sondern anderen Fasern beigemischt, um diesen Elastizität zu geben. Polyurethan ist der Hauptbestandteil von Elasthan und Spandex®. Polyurethan kann auch aufgeschäumt werden und in dieser Form Verwendung in dem erfindungsgemäßen Sicherungsseil finden, beispielsweise als regenabweisende äußere Umhüllung. Polyurethan kann beispielsweise auch auf einen textilen Untergrund aufgetragen werden. Dabei kann auch eine Struktur hineingedrückt werden, die ästhetischen Zwecken dient.

Elasthan besteht zum größten Teil aus Polyurethan und ist eine stark elastische synthetische Faser. Elasthan wird normalerweise nicht rein verwendet, sondern anderen Fasern beigemischt, um diesen Elastizität zu geben. Elasthan lässt sich (wie Polyester) bei der Herstellung gut einfärben.

Gelege, Geflechte und/oder Gewebe, die Fasermischungen aus Polyurethan- oder Elasthanfasern enthalten, bieten aufgrund ihrer Elastizität einen erhöhten Schutz gegen die Einwirkung einer Säge oder eines Bolzenschneiders.

Eine weitere Anforderung an das erfindungsgemäße Sicherungsseil bestand darin, die Schnittfestigkeit, z. B. gegenüber scharfen Klingen, wie die eines Messers, zu erhöhen. Die Schittfestigkeit des Sicherungsseils wird beispielsweise dadurch erhöht, in dem Gelege, Geflechte und/oder Gewebe eingesetzt werden, die Aramid-Fasern enthalten. Es gibt verschiedenen Arten von Aramid-Fasern. Synthetische Fasern aus Para-Aramid sind bekannt unter Markennamen wie Kevlar®. Ihre hervorragenden Eigenschaften machen Ausrüstung und Zubehör sicher und schnittfest. Para-Aramid Fasern sind leicht und dennoch fester als Stahl, schlagzäh, zug-, reiß- und hitzefest. In einer Ausführungsform der Erfindung werden Sie mit anderen technischen Fasern gemischt, so beispielsweise durch die Beimischung von Elastan. Bevorzugt ist auch die Verbindung mit der nicht brennbaren Textilfaser PANOX®, einer oxidierten, thermisch stabilisierten Polyacryl-Faser. In einer weiteren Ausführungsform der Erfindung erfolgt eine zusätzliche Aluminisierung von Para-Aramid auf der Oberfläche, wodurch dessen Temperaturbeständigkeit und Isolierungswirkung erhöht wird. Die Verwendung von Para-Aramid wirkt sich vorteilhaft auf das erfindungsgemäße Sicherungsseil aus, denn es ist flammhemmend, ist nicht schmelzend und besitzt eine hohe Temperaturbeständigkeit, ist überdurchschnittlich schnittfest, extrem zugfest und zeigt eine gute Beständigkeit gegen Chemikalien.

Meta-Aramid-Fasern, wie beispielsweise Nomex® sind extrem hitzebeständig. Die schwer entflammbaren Fasern verlöschen nach Entfernung der Feuerquelle von selbst. Bei Temperaturen von mehr als 370°C beginnt Nomex® zu verkohlen. Durch diese endotherme Reaktion baut das Material einen Schutzschirm auf, die Hitze kann nur langsam eindringen - ein wertvoller Zeitgewinn. Meta-Aramide sind darüber hinaus stabil gegen zahlreiche Lösungsmittel, Säuren und Laugen. Ihre statische Aufladung lässt sich durch die Beimischung von Carbon- oder Metallfasern vermeiden. Die Verwendung von Para-Aramid wirkt sich vorteilhaft auf das erfindungsgemäße Sicherungsseil aus, denn es bietet einen permanenten Flammschutz, hat eine hohe Lebensdauer, ist nicht aufbrechend unter Flammeneinwirkung, ist •Beständigkeit gegen Säuren, Laugen und Gase und hat antistatische Eigenschaften.

Weiterhin besonders geeignet zur Verwendung in den Gelegen, Geflechten, Geweben, Multifilamenten und Garnen sind Fasern aus Polyethylen, insbesondere HPPE, HMPE oder UHMW-PE. Die Abkürzungen HPPE, HMPE und UHMW-PE stehen für "Hochleistungs-Polyethylenfasern" beziehungsweise "Ultra High Molecular Weight Polyethylene". Beide bezeichnen eine Polyethylenfaser, die unter Markennamen wie Dyneema® oder Spectra® bekannt ist. Das Molekulargewicht von HPPE ist 10 bis 100 mal höher als das von normalem Polyethylen (PE). HPPE unterbietet das geringe spezifische Gewicht der Aramide nochmals um rund 30% und ist dabei äußerst ermüdungsbeständig. Weitere Vorteile sind die hohe UV-Beständigkeit, geringe Bruchdehnung und hohe Schnitt- sowie Abriebfestigkeit. Dank ihrer chemisch einfachen Struktur sind die Fasern besonders unempflindlich gegenüber Chemikalien. Ein Beispiel für eine HPPE Faser ist die Dyneema®-Faser. Diese hat Zugfestigkeitswerte von 3 bis 4 GPa (3000 bis 4000 N/mm²). Die Reißlänge von Dyneema beträgt knapp 400 km. Dyneema ist mit einer Dichte von 0,95 bis 0,97 g/cm³ etwas leichter als Wasser und schwimmt. Die Faser ist sehr lange haltbar und hat eine hohe Beständigkeit gegen Abrieb, Feuchtigkeit, UV-Strahlen und Chemikalien. Die Festigkeit bei Raumtemperatur ist sehr hoch und steigt bei fallenden Temperaturen. Bei -30 °C beträgt der Festigkeitszuwachs schon 30 % gegenüber Raumtemperatur.

Das erfindungsgemäße Sicherungsseil, das in einer bevorzugten Ausführungsform Gelege, Geflechte und/oder Gewebe enthält, die Aramid-Fasern und/oder HMPE-Fasern enthalten, ist demnach besonders hitzeresistent, kälteresistent und besonders widerstandsfähig gegen Schnitteinwirkung.

Die Hitzeresistenz und die Schnittfestigkeit werden erfindungsgemäß dadurch weiter erhöht, dass das Sicherungsseil Gelege, Geflechte und/oder Gewebe enthält, die Fasergemische enthalten, in denen mindestens eine weitere Faser oder ein weiteres Garn enthalten ist das ausgewählt ist aus Keramikfasern, Quarzfasern, Glasfasern, Basaltfasern, Kohlenstofffasern, Borfasern, Kristallfasern, Schlackenfasern und/oder Nanotubefasern oder Garnen davon.

Die Schnittfestigkeit gegenüber scharfen Gegenständen, wie beispielsweise einer Messerklinge, wird erfindungsgemäß besonders effektiv dadurch erhöht, dass das Sicherungsseil als Kern eine Kette aufweist. Eine Kette im Sinne der Erfindung wird ein Kettenstrang mit einer Vielzahl an beweglichen, ineinandergefügten oder mit Gelenken verbundenen Kettengliedern verstanden. Die Kette ist beispielsweise ausgebildet als Panzerkette oder Ankerkette oder besteht aus mehreren modifizierten, einseitigen Kettengliedern mit Ösen an beiden Enden, welche mittels Füge-Prozess zusammengefügt sind, sowie zwischen den einseitigen Kettengliedern angeordneten normalen zweiseitigen Kettengliedern

Die Kette kann aus verschiedenen Werkstoffen bestehen, beispielsweise aus Metall oder Kunststoff.

In einer bevorzugten Ausführungsform besteht die Kette aus Metall, wie beispielsweise Stahl, gehärtetem Stahl, verzinktem Stahl, Edelstahl, Titan, Aluminium oder aus einer Metalllegierung.

In einer ebenfalls bevorzugten Ausführungsform der Erfindung besteht die Kette aus Kunststoff oder einem Verbundwerkstoff. Geeignete Verbundwerkstoffe sind zum Beispiel Metall-Kunststoff-Verbundwerkstoffe, faserverstärkte bzw. Glas-enthaltende Verbundwerkstoffe.

In einer besonders bevorzugten Ausführungsform besteht die Kette aus einem Verbundwerkstoff, der ausgewählt ist aus glasfaserverstärktem Glas, einem Metallmatrix-Verbundwerkstoff, z. B. aus borfaserverstärktem Aluminium, keramischen Faserverbundwerkstoffen (z. B. aus kohlenstofffaserverstärktem Siliciumcarbid), eigenverstärkter Thermoplaste (Kunststofffasern in Kunststoffmatrix der gleichen Zusammensetzung), Faser-Kunststoff-Verbunden, wie kohlenstofffaserverstärktem Kunststoff (CFK), glasfaserverstärkter Kunststoff (GFK), aramidfaserverstärktem Kunststoff (AFK), naturfaserverstärktem Kunststoff (NFK), TiGr-Composit (Werkstoff aus Titan, Kohlenstofffasern und Epoxidharz) und glasfaserverstärktem Aluminium (Werkstoff aus glasfaserverstärktem Kunststoff und Aluminium).

Insbesondere bevorzugt gemäß der vorliegenden Erfindung ist ein Sicherungsseil, das als Kern eine Metallkette aufweist.

In einer weiteren Ausführungsform wurde das Material der Kette einer Oberflächenbehandlung oder Oberflächenveredelung unterzogen und weist eine entsprechende Beschichtung auf. Dazu zählen Verfahren wie Verzinken, Pulverbeschichten usw. Durch die Oberflächenbehandlung werden die Eigenschaften der Oberfläche der Kette optimiert, um weitere Funktionen zu erfüllen. Das Verzinken der Stahlkette beispielsweise erhöht den Korrosionsschutz, alternativ dazu kann die Stahlkette zu diesem Zweck aber auch mit einer PVC-Beschichtung versehen werden.

Je nach Anwendungsgebiet ist die Größe der Kette, insbesondere deren Stärke bzw. Durchmesser unterschiedlich ausgeführt. Für die Diebstahlsicherung von beweglichen Gegenständen sind Ketten ausreichend, die einen Durchmesser von 8 mm oder geringer, vorzugsweise von 5 mm oder geringer, besonders bevorzugt von 4 mm oder 3 mm aufweist. Die Dimensionierung der Kette im Bereich Diebstahlschutz wird dabei vorzugsweise so gewählt, dass das Gewicht des Sicherungsseils nicht wesentlich erhöht wird.

Für industrielle Anwendungen werden größere Ketten als Kern in das erfindungsgemäße Sicherungsseil eingebaut. Vorzugsweise weisen die Ketten dieser Ausführungsform eine Stärke bzw. Durchmesser von bis zu 30 mm, wie beispielsweise von 10 mm oder größer, besonders bevorzugt von 15 mm oder größer oder 20 mm oder größer, insbesondere bevorzugt von 25 mm oder größer auf.

Zum Schutz vor Umwelteinflüssen und aus ästhetischen Gründen kann das Sicherungsseil weitere, insbesondere außenliegende Schichten umfassen.

In einer Ausführungsform weist das erfindungsgemäße Sicherungsseil weiterhin eine Ummantelung auf, die bevorzugt UV-undurchlässig ausgebildet ist. Außerdem kann die Ummantelung ein Kunststoffmaterial, insbesondere Teflon, Acryl und/oder Silikon umfassen. Dadurch werden die Textilfasern wirksam vor Witterungseinflüssen geschützt. Außerdem hält diese Ummantelung auch aus dem Faserverbund herausragende Textilfasern zusammen. Über der Ummantelung können weitere Textilfasern, Gelege, Geflechte oder Gewebe angeordnet werden, die nicht unbedingt Sicherungsaspekte erfüllen müssen, dafür aber bedruckt werden können, um das Strangschloss grafisch besonders zu gestalten. Alternativ kann auch die Ummantelungen bedruckt oder farblich angepasst werden, um eine gewünschte Gestaltung zu erreichen.

Die witterungsbeständige Ummantelung bzw. darüberliegende Textilfasern, Gelege, Geflechte oder Gewebe können in einer weiteren Ausführungsform der Erfindung so gestaltet werden, dass zusätzlich Sicherheitsaspekte, beispielsweise eine verbesserte Verkehrssicherheit, gewährleistet wird. Dazu kann die Ummantelung mit reflektierenden optischen Elementen ausgestattet werden. Geeignete optische Elemente sind an sich bekannt und können ausgewählt sein aus Linsen oder Prismen oder in die Ummantelung eingebetteten Kugeln oder Kombinationen davon. Alternativ kann auf den über der Ummantelung liegenden Textilfasern, Gelegen, Geflechten oder Geweben eine Kunststoffschicht angeordnet werden, die solche optischen Elemente enthält.

Eine weitere vorteilhafte Ausgestaltung des Sicherungsseils besteht darin, dass zwischen jeder Gelege-, Geflecht- oder Gewebeschicht eine metallische Schicht angeordnet sein kann. Die metallische Schicht enthält bevorzugt Metalldrähte oder Metallfolie. Alternativ können auch die Textilfasern mit einer metallischen Beschichtung ausgestattet werden, wobei die metallische Schicht insbesondere geschlossen ausgebildet ist. Diese Anordnung der metallischen Schichten ist besonders vorteilhaft und erhöht die Flammbeständigkeit des Sicherungsseils. Es können allerdings auch nicht geschlossene Schichten vorliegen, die insbesondere einen einzelnen Draht aufweisen, der vorteilhaft spiralförmig gelegt ist. Diese Anordnung trägt auch zur Verbesserung der Flammbeständigkeit bei, jedoch wird dadurch insbesondere die Zug-, Schnitt- und Reißfestigkeit des Sicherungsseils erhöht.

In einer weiteren bevorzugten Ausführungsform kann die Ummantelung des erfindungsgemäßen Sicherungsseils abrasive Stoffe enthalten. Geeignete abrasive Stoffe sind beispielsweise Partikel, die bevorzugt ausgewählt sind aus der Gruppe enthaltend Aluminiumoxide, Korund, Borcarbide, Siliziumdioxide, Siliziumcarbide, Sande und Glaspartikel. Anstatt oder zusätzlich zu der Ummantelung können die abrasiven Stoffe in Schichten enthalten sein, die zusätzlich zwischen den einzelnen Gelege-, Geflecht- oder Gewebeschichten angeordnet sind. Diese abrasiven Stoffe führen zum Abstumpfen scharfer Werkzeuge bei Diebstahlversuchen.

Die Ummantelung bzw. zwischen den einzelnen Gelege-, Geflecht- oder Gewebeschichten angeordnete Zwischenschichten können weitere Additive enthalten. Als Additive können leitfähige Substanzen, Flammschutzmittel, lumineszierende Stoffe und Metalle enthalten sein. Dabei können die leitfähigen Substanzen ausgewählt sein aus der Gruppe enthaltend Ruß, Kohlefasern, Metallpulver und Nanopartikel, insbesondere Kohlenstoffnanoröhren. Es können auch Kombinationen dieser Substanzen zum Einsatz kommen. Leitfähige Substanzen können dazu genutzt werden, das Sicherungsseil mit smarten Funktionen oder einer elektronischen Diebstahlsicherung auszustatten. Als Flammschutzmittel werden bevorzugt Phosphate, Borate, insbesondere Ammoniumpolyphosphat, Tris(tri-bromneopentyl)phosphat, Zinkborat oder Borsäurekomplexe von mehrwertigen Alkoholen verwendet. Diese Additive tragen zu einem erhöhten Schutz des Sicherungsseils vor Hitzeeinwirkung und Feuer bei. Als lumineszierende Stoffe werden bevorzugt fluoreszierende und/oder phosphoreszierende Stoffe auf anorganischer oder organischer Basis, insbesondere Zinksulfid und Erdalkalialuminate. Diese Additive können zur Erhöhung der Verkehrssicherheit (Gesehen werden im Dunkeln) beitragen.

In einer weiteren vorteilhaften Ausgestaltung kann das Sicherungsseil eine wasserabweisende Imprägnierung aufweisen. Die wasserabweisende Imprägnierung ist vorzugsweise auf der äußeren Ummantelung aufgebracht. Es ist jedoch auch möglich, eine oder mehrere der Gelege-, Geflecht- oder Gewebeschichten mit einer wasserabweisenden Imprägnierung auszustatten.

Eine intelligente Sicherung des Strangschlosses ist dann möglich, wenn zumindest ein elektrischer Leiter im Sicherungsseil angeordnet ist und Alarmierungsmittel vorgesehen sind, die bei Durchtrennen des elektrischen Leiters eine Alarmierung auslösen. Diese Alarmierung könnte dann mit geeigneten Übertragungsmitteln direkt an eine Applikation einer mobilen Computereinrichtung, eines Mobiltelefons, eines Smartphones oder Tablet-PCs übertragen werden.

Dieser zumindest eine elektrische Leiter kann auf verschiedene Weise vorliegen, die auch miteinander kombiniert werden können. So kann die Kette im Kern des Sicherungsseils, sofern diese aus einem leitfähigen Material besteht, als elektrischer Leiter dienen. Die oben beschriebenen Additive aus leitfähigem Material könne ebenfalls dazu genutzt werden, einen elektrischen Leiter zu erzeugen. Er kann im Rahmen einer metallischen Schicht vorliegen oder er kann, beispielsweise als einzelner Draht oder als Drahtgeflecht, in die Textilschichten integriert sein, beispielsweise in zumindest einem textilen Gelege, Geflecht bzw. Gewebe mit eingearbeitet sein.

Um eine Absicherung gegen Diebstahl zu gewährleisten, muss das Sicherungsseil an beiden Enden mit einer geeigneten Schließ- bzw. Sicherungsvorrichtung verbunden werden können. Geeignet sind prinzipiell alle herkömmlichen Schließvorrichtungen, die zur Diebstahlsicherung von beweglichen Gegenständen benutzt werden bzw. benutzt werden können. Ist die Schließvorrichtung nicht direkt an dem Sicherungsseil befestigt, so weist das Sicherungsseil vorzugsweise an beiden Enden Vorrichtungen auf, mit denen einen Schließvorrichtung, wie zum Beispiel ein Vorhängeschloss, verbunden werden kann. In einer Ausführungsform weist das Sicherungsseil an beiden Enden deshalb eine Öse oder eine Schlaufe oder an einem Ende eine Öse und an dem anderen Ende eine Schlaufe auf. Solche Schlaufen oder Ösen lassen sich durch Klemmen eines gebogenen Endes des Sicherungsseiles an das Sicherungsseil beispielsweise mittels einer Klemme aus Metall oder Kunststoff erzeugen, wobei bevorzugt vorgesehen ist, dass die Verbindungsstelle verkleidet, insbesondere eingegossen ist. Hierfür eignet sich besonders ein Kunststoff. Die Schlaufe kann auch durch Nähen gebildet und danach mit Kunststoff vergossen werden. Die Ösen können verschiedene Formen aufweisen und beispielsweise kreisförmig oder 0-förmig sein. Die Ösen können durch separate Bauteile, beispielsweise aus Metall oder wie oben für die Kette beschrieben, aus einem Verbundwerkstoff, gebildet werden, die in geeigneter Weise fest mit dem jeweiligen Ende des Sicherungsseils verbunden werden können. Vorzugsweise werden Ösen aus Stahl verwendet. Zur Verbesserung des Diebstahlschutzes sind Ösen aus gehärtetem Stahl besonders bevorzugt. Zur Verbesserung des Korrosionsschutzes können die Ösen mit korrosionshemmenden Beschichtungen, wie beispielsweise einer PVC-Beschichtung versehen werden. Alternativ können die Ösen verzinkt werden. Die Größe, insbesondere der Durchmesser der Ösen kann unterschiedlich sein. Vorzugsweise weisen die Ösen von Sicherungsseilen, die im Bereich der Diebstahlsicherung von beweglichen Gegenständen eingesetzt werden, einen Innendurchmessen im Bereich von 8 mm bis 200 mm, vorzugsweise von 8 bis 150 mm oder von 8 bis 100 mm, mehr bevorzugt von 8 bis 90 mm, 8 bis 80 mm, 8 bis 70 mm oder 8 bis 60 mm, besonders bevorzugt von 8 bis 50 mm, 8 bis 40 mm, 8 bis 30 mm oder 8 bis 20 mm, auf.

Es kann zweckmäßig sein, die Enden des Sicherungsseils mit einer Schließ- bzw. Sicherungsvorrichtung zu verbinden, die fest mit dem beweglichen Gegenstand verbunden ist. In einer weiteren Ausführungsform kann das Sicherungsseil deshalb an einem Ende eine Öse oder Schlaufe und an dem anderen Ende ein geeignetes Sicherungselement, das in einer an dem beweglichen Gegenstand fest installierten Schließ- bzw. Sicherungsvorrichtung arretiert werden kann, aufweisen. So könnte die Sicherung von Gegenständen dadurch erfolgen, dass das Sicherungsseil um den Gegenstand herumgeführt wird, das freie Ende dabei durch die Öse bzw. Schlaufe gezogen ist und dann eine Arretierung des freien Endes erfolgt. Solch eine fest installierte Schließ- bzw. Sicherungsvorrichtung ist beispielsweise ein Rahmenschloss. Das geeignete Sicherungselement ist beispielsweise ausgewählt aus einem Bolzen oder einem Kloben.

Des Weiteren ist bevorzugt, wenn das Sicherungsseil an den Enden Teile einer Schließ- bzw. Sicherungsvorrichtung aufweist, die miteinander zusammenwirken. Solche Schließeinrichtungen sind dem Fachmann aus dem Bereich der Zweiradschlösser bekannt. In einer Ausführungsform der Erfindung ist die Schließ- bzw. Sicherungsvorrichtung als Schloss ausgeführt. In einer bevorzugten Ausführungsform ist die Schließ- bzw. Sicherungsvorrichtung als Schloss ausgeführt, das mit einem Schlüssel schließbar ist. Auch denkbar ist ein Zahlenschloss als Schließvorrichtung.

Die Länge des Sicherungsseils der Erfindung ist entsprechend dem gewünschten Verwendungszweck unterschiedlich wählbar. Im Bereich der Zweiradsicherung sind Längen zwischen 50 cm und 200 cm geeignet. Besonders geeignet sind Längen zwischen 50 cm und 160 cm, insbesondere zwischen 50 cm und 100 cm. Sollen andere bewegliche Gegenstände, wie beispielsweise Boote, gesichert werden, wird eine entsprechend größere Länge des Sicherungsseils gewählt. Gleiches gilt für das erfindungsgemäße Sicherungsseil im Bereich von Industrieanwendungen.

Folgende Ausführungsformen des erfindungsgemäßen Sicherungsseils sind besonders bevorzugt:
i. Das Sicherungsseil weist als Kern eine Metallkette auf. Darüber angeordnet sind 3 Schichten von Gelegen, Geflechten und oder Geweben.
ii. Das Sicherungsseil weist als Kern eine Kette aus einem Verbundwerkstoff auf. Darüber angeordnet sind 3 Schichten von Gelegen, Geflechten und oder Geweben.
iii. Das Sicherungsseil weist als Kern eine Kette aus einem Verbundwerkstoff auf. Darüber angeordnet sind 4 Schichten von Gelegen, Geflechten und oder Geweben.
iv. Das Sicherungsseil weist als Kern eine Kette aus Metall auf. Darüber angeordnet sind 4 Schichten von Gelegen, Geflechten und oder Geweben.
v. Das Sicherungsseil weist als Kern eine Kette aus Metall auf. Darüber angeordnet sind 5 Schichten von Gelegen, Geflechten und oder Geweben.
vi. Das Sicherungsseil weist als Kern eine Kette aus aus einem Verbundwerkstoff auf. Darüber angeordnet sind 5 Schichten von Gelegen, Geflechten und oder Geweben.
vii. Die Gelege-, Geflecht- bzw. Gewebeschichten des Sicherungsseils der Ausführungsformen i. bis vi. bestehen aus oder enthalten Fasern und/oder Garne aus unterschiedlichen Materialien.
viii. Die Gelege-, Geflecht- bzw. Gewebeschichten des Sicherungsseils der Ausführungsformen i. bis vi. bestehen aus oder enthalten Fasern und/oder Garne aus dem gleichen Material.
ix. Mindestens eine der Gelege-, Geflecht- bzw. Gewebeschichten des Sicherungsseils der Ausführungsformen i. bis vii. enthält oder besteht aus einem Geflecht aus HPME-Garn und PES-Garn.
x. Mindestens eine der Gelege-, Geflecht- bzw. Gewebeschichten des Sicherungsseils der Ausführungsformen i. bis vii. enthält oder besteht aus einem Geflecht aus Glasfaser-Garn.
xi. Mindestens eine der Gelege-, Geflecht- bzw. Gewebeschichten des Sicherungsseils der Ausführungsformen i. bis vii. enthält oder besteht aus einem Geflecht aus Aramid-Garn.
xii. Die Kette im Kern des Sicherungsseils gemäß den Ausführungsformen i. bis x. ist von Multifilamenten umgeben, die vorzugsweise aus HMPE bestehen.
xiii. Das Sicherungsseil gemäß den Ausführungsformen i. bis xii. weist mindestens eine metallische Schicht zwischen den Gelege-, Geflecht- bzw. Gewebeschichten auf.
xiv. Das Sicherungsseil gemäß den Ausführungsformen i. bis xiii. weist eine äußere Umhüllung auf, die aus einem dekorativen Geflecht, beispielsweise aus PES-Zwirn, gebildet wird.
xv. Das Sicherungsseil gemäß den Ausführungsformen i. bis xiv. weist einen elektrischen Leiter auf.
xvi. Das Sicherungsseil gemäß den Ausführungsformen i. bis xv. weist an jedem Ende eine Öse auf.
xvii. Das Sicherungsseil gemäß den Ausführungsformen i. bis xv. weist an jedem Ende eine Schlaufe auf.
xviii. Das Sicherungsseil gemäß den Ausführungsformen i. bis xv. weist an einem Ende eine Öse und an dem anderen Ende eine Schlaufe auf.
xix. Das Sicherungsseil gemäß den Ausführungsformen i. bis xv. weist an einem Ende eine Öse oder Schlaufe und an dem anderen Ende einen Bolzen oder einen Kloben auf.

Besonders bevorzugt ist es, wenn die einzelnen Schichten von Gelegen, Geflechten und oder Geweben aus Fasern und/oder Garnen unterschiedlicher Materialien bestehen oder solche enthalten. Dadurch können optimale Eigenschaften des Sicherungsseils erzeugt werden. Beispielsweise können mehr innen liegende Schichten eine hohe Zugbeständigkeit aufweisen und mehr au ßenliegende Schichten eine hohe Schnittfestigkeit, Hitze- bzw. Kältebeständigkeit aufweisen.

Die Erfindung wird nachstehend anhand von 9 Zeichnungen näher erläutert.

Es zeigen:
- Figur 1, 2 und 3: das erfindungsgemäße Sicherungsseil mit verschiedenartigen Ösen;
- Figur 4: das erfindungsgemäße Sicherungsseil mit einer Öse und einem Bolzen;
- Figur 5: das erfindungsgemäße Sicherungsseil zur Verbindung mit einem Rahmenschloss;
- Figur 6: das erfindungsgemäße Sicherungsseil mit einer als Schloss mit Schlüssel ausgeführten Schließvorrichtung in verschiedenen Ausführungsformen;
- Figur 7: den Schichtaufbau einer Ausführungsform des erfindungsgemäßen Sicherungsseils mit 4 äußeren Schichten;
- Figur 8: den Schichtaufbau einer Ausführungsform des erfindungsgemäßen Sicherungsseils mit 3 äußeren Schichten; und
- Figur 9: den Schichtaufbau einer Ausführungsform des erfindungsgemäßen Sicherungsseils mit 5 äußeren Schichten.

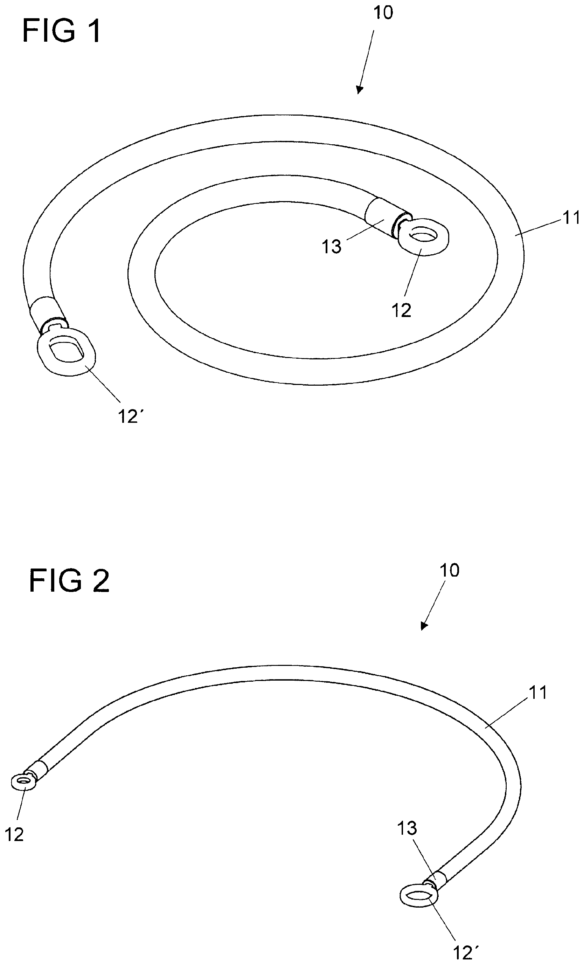

Figur 1 zeigt eine Sicherungseinrichtung 10, die das erfindungsgemäße Sicherungsseil 11 aufweist. An einem Ende weist das Sicherungsseil 11 eine runde Öse 12 und an dem anderen Ende eine ovale Öse 12' auf. Die beiden Ösen 12 und 12' können unterschiedliche Größen aufweisen. Die kleine Öse kann durch die große Öse gezogen werden, um beispielsweise die Länge des Sicherungsseils zu vergrößern. Außerdem bietet ein großer Ösen-Innendurchmesser auch die Möglichkeit, das Seil mit anderen Bügelschlössern zu verbinden. Mit Hilfe der Ösen kann das Sicherungsseil beispielsweise mit einem Vorhängeschloss verbunden werden.

Figur 2 zeigt eine Sicherungseinrichtung 10, die das erfindungsgemäße Sicherungsseil 11 aufweist. Das Sicherungsseil 11 dieser Ausführungsform weist an den Enden runde Ösen 12, 12' auf, die unterschiedliche Durchmesser aufweisen.

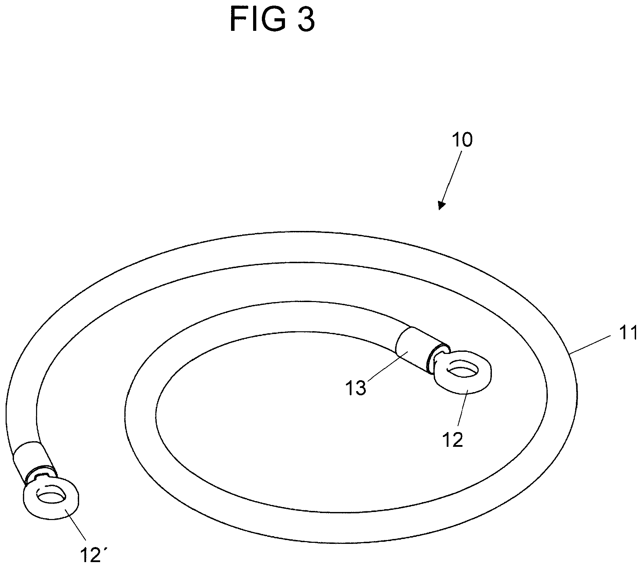

Figur 3 zeigt eine Sicherungseinrichtung 10, die das erfindungsgemäße Sicherungsseil 11 aufweist. Das Sicherungsseil 11 dieser Ausführungsform weist an den Enden runde Ösen 12, 12' auf, die gleiche Durchmesser aufweisen.

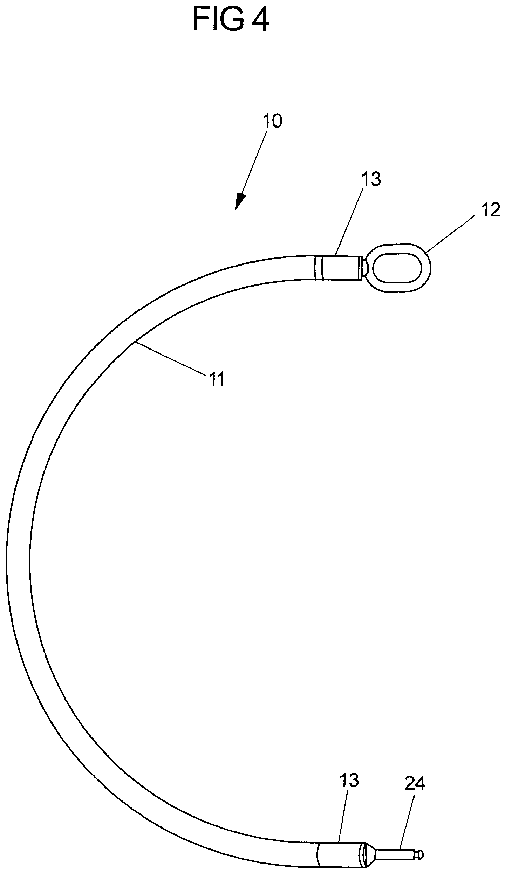

Figur 4 zeigt eine Sicherungseinrichtung 10, die das erfindungsgemäße Sicherungsseil 11 aufweist. Das Sicherungsseil 11 dieser Ausführungsform weist an einem Ende eine Öse 12 und an dem anderen Ende einen Bolzen 24 auf.

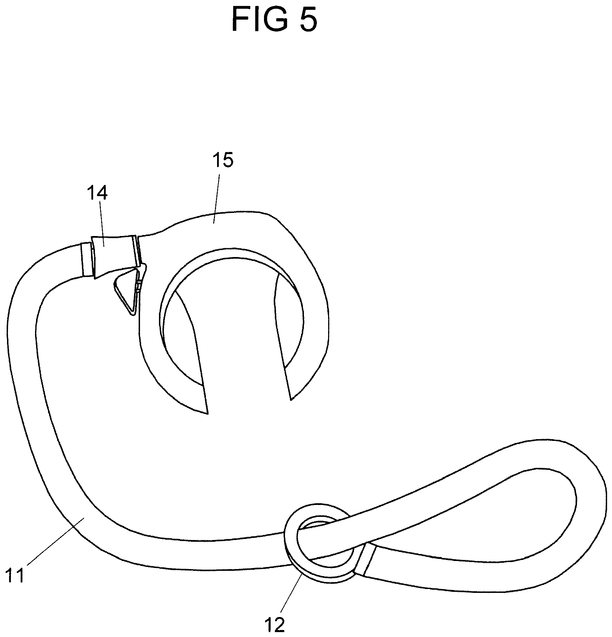

Figur 5 zeigt eine Ausführungsform des Sicherungsseils 11, dass über ein Verbindungselement 14 mit einem Rahmenschloss 15 eines Fahrrads verbunden ist. Das Fahrrad kann zusätzlich zu dem Rahmenschloss, was das Wegfahren oder Wegschieben des Fahrrads verhindert, mit dem Sicherungsseil 11 zusätzlich noch gegen Wegtragen gesichert werden. Das Sicherungsseil 11 kann beispielsweise um eine Straßenlaterne oder Teile eines örtlich fest installierten Fahrradständers herumgeführt werden, wobei das Ende mit dem Verbindungselement 14 durch die Öse 12 gezogen wird und dann eine Arretierung des Sicherungsseils 11 mit dem Verbindungselement 14 in dem Rahmenschloss 15 erfolgt.

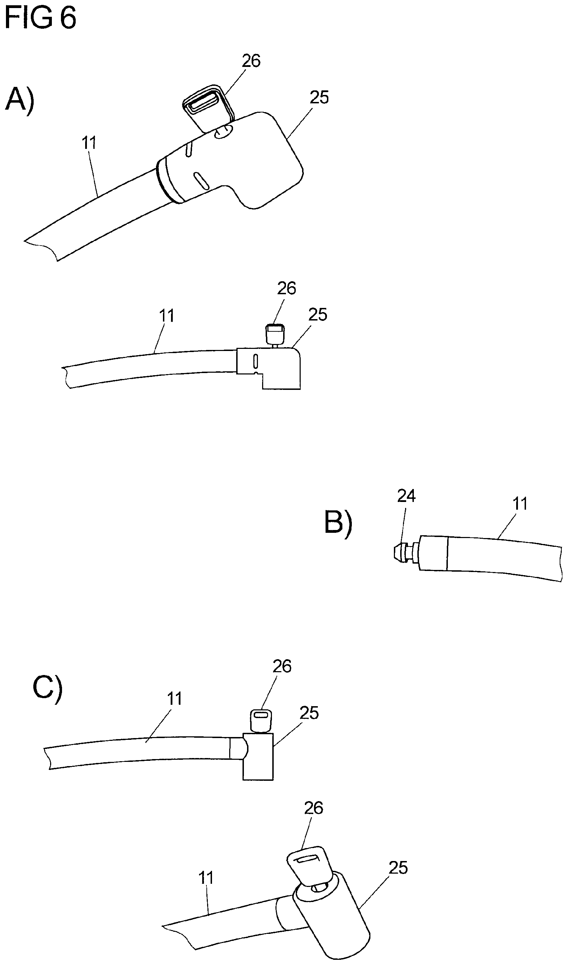

Figur 6 zeigt mehrere Ausführungsformen des Sicherungsseils 11, die an einem Ende ein Schloss 25 mit einem Schlüssel 26 aufweisen und an dem anderen Ende einen Bolzen 24. Das Sicherungsseil 11 ist in den Figuren 6A-C nicht vollständig abgebildet. Figur 6 (A) zeigt eine Ausgestaltung des Schlosses 25 mit Schlüssel 26 aus zwei Perspektiven. In dieser Ausgestaltung weist das Schloss 25 eine L-Form auf. Eine weitere Ausgestaltung des Schlosses 25 mit Schlüssel 26 zeigt Figur 6 (C). In dieser Ausgestaltung ähnelt das Schloss 25 einer T-Form, die Ausgestaltung ist ebenfalls aus zwei Perspektiven abgebildet. Figur 6 (B) zeigt das andere Ende des Sicherungsseiles 11, das einen Bolzen 24 aufweist. Der Bolzen 24 wird zur Sicherung des Gegenstandes, wie beispielsweise eines Fahrrades, im Schloss 25 arretiert, das mit einem Schlüssel 26 schließbar ist. Der zu sichernde Gegenstand kann damit gegen Wegtragen oder Wegschieben gesichert werden. Das Schloss 25 kann auch auf jede andere denkbare Art und Weise ausgeführt sein.

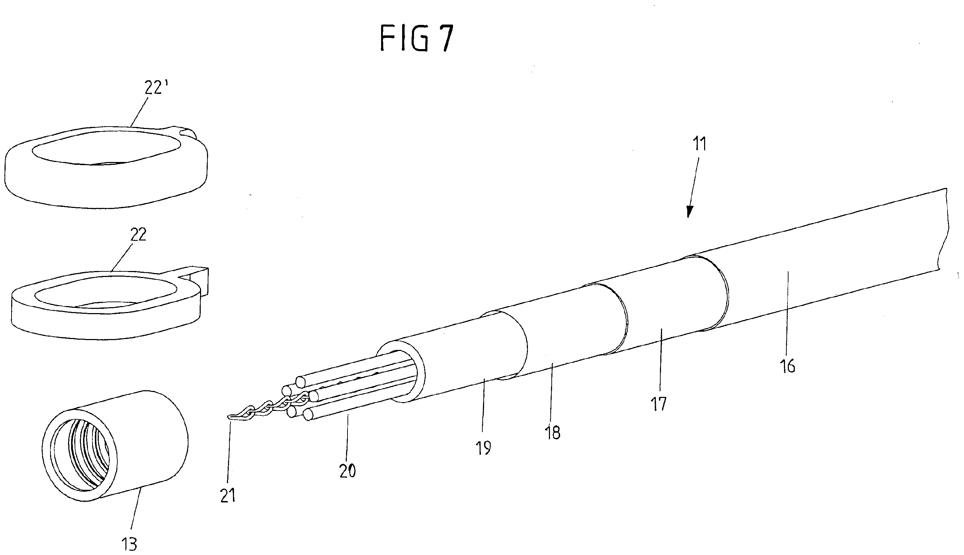

Figur 7 veranschaulicht den Schichtaufbau deiner Ausführungsform des erfindungsgemäßen Sicherungsseils 11. Den Kern bildet eine Kette 21 aus Metall, die in dem hier gezeigten Beispiel als Panzerkette ausgeführt ist. Die Kette 21 ist von Multifilamenten 20 umgeben, die aus schnittfesten Fasermaterialien bestehen. Die Multifilamente 20 sind von einem schnittfesten Geflecht umgeben, dass beispielsweise aus einem Gemisch aus HMPE Garn und PES Garn besteht. Darüber ist ein feuerfestes Geflecht 18 angeordnet, dass beispielsweise aus Glasfaser-Garn besteht. Über dem Geflecht 18 befindet sich ein weiteres feuer- und schnittfestes Geflecht 17, das beispielsweise aus Aramid-Garn besteht. Den äußeren Abschluss bildet ein dekoratives textiles Geflecht 16, das wahlweise eine wasser- und schmutzabweisende Imprägnierung aufweisen kann.

An den Enden des Sicherungsseils 11 können, beispielsweise mittels einer Metallhülse 13, Ösen 22, 22' befestigt werden. In der hier gezeigten Ausführungsform bestehen die Ösen 22, 22' aus Stahl. Die als Ausführungsform 22' gezeigte Öse ist zum Schutz vor Korrosion und zum Schutz vor Beschädigung des zu sichernden beweglichen Gegenstands mit PVC beschichtet.

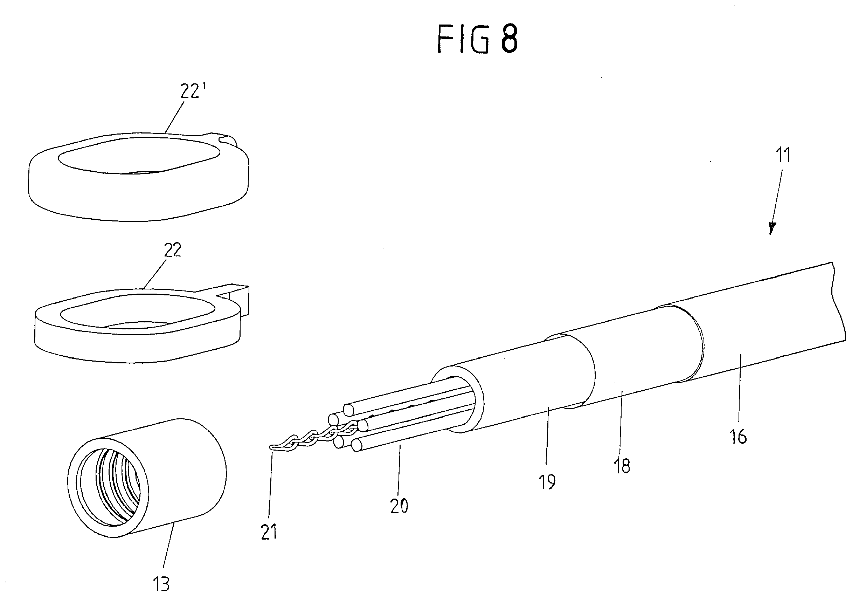

Figur 8 veranschaulicht den Schichtaufbau deiner Ausführungsform des erfindungsgemäßen Sicherungsseils 11 mit drei äußeren Schichten. Den Kern bildet eine Kette 21 aus Metall, die in dem hier gezeigten Beispiel als Panzerkette ausgeführt ist. Die Kette 21 ist von Multifilamenten 20 umgeben, die aus schnittfesten Fasermaterialien bestehen. Die Multifilamente 20 sind von einem schnittfesten Geflecht umgeben, dass beispielsweise aus einem Gemisch aus HMPE Garn und PES Garn besteht. Darüber ist ein feuerfestes Geflecht 18 angeordnet, dass beispielsweise aus Glasfaser-Garn besteht. Den äußeren Abschluss bildet ein dekoratives textiles Geflecht 16, das wahlweise eine wasser- und schmutzabweisende Imprägnierung aufweisen kann.

Die Enden des Sicherungsseils sind wie in Figur 7 gestaltet.

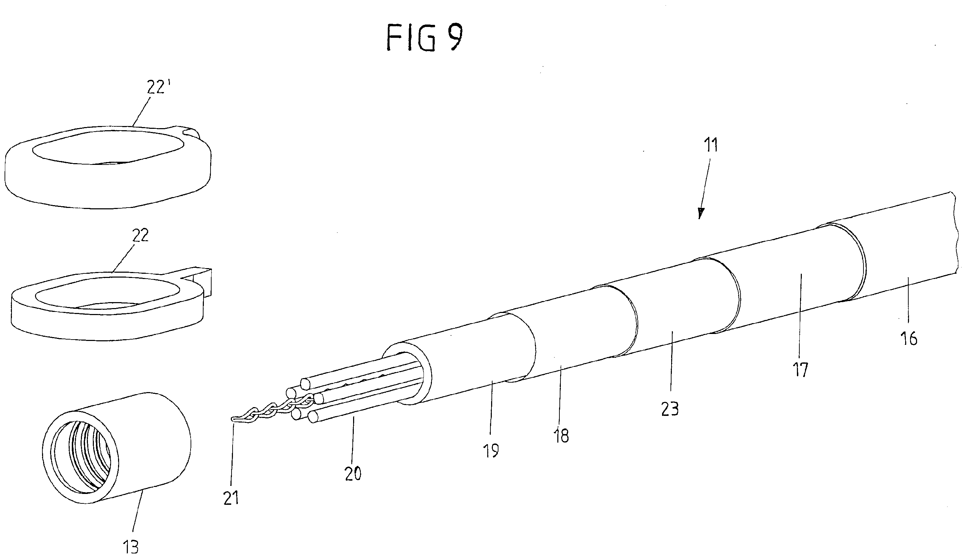

Figur 9 veranschaulicht den Schichtaufbau deiner Ausführungsform des erfindungsgemäßen Sicherungsseils 11 mit 5 äußeren Schichten. Den Kern bildet eine Kette 21 aus Metall, die in dem hier gezeigten Beispiel als Panzerkette ausgeführt ist. Die Kette 21 ist von Multifilamenten 20 umgeben, die aus schnittfesten Fasermaterialien bestehen. Die Multifilamente 20 sind von einem schnittfesten Geflecht umgeben, dass beispielsweise aus einem Gemisch aus HMPE Garn und PES Garn besteht. Darüber ist ein feuerfestes Geflecht 18 angeordnet, dass beispielsweise aus Glasfaser-Garn besteht. Über dem Geflecht 18 befindet sich ein weiteres feuer- und schnittfestes Geflecht 17, das beispielsweise aus Aramid-Garn besteht. In der hier gezeigten Ausführungsform ist zwischen den Schichten 17 und 18 eine metallische Schicht angeordnet. Die metallische Schicht wird in diesem Beispiel von einer Aluminiumfolie gebildet. Die metallische Schicht ist besonders vorteilhaft und erhöht die Flammbeständigkeit des Sicherungsseils und dient gleichzeitig als elektrischer Leiter für ein Alarmierungsmittel. Den äußeren Abschluss bildet ein dekoratives textiles Geflecht 16, das wahlweise eine wasser- und schmutzabweisende Imprägnierung aufweisen kann.

Die Enden des Sicherungsseils sind wie in Figur 7 gestaltet.

Die in den Abb. 7 bis 9 gezeigten Ausführungsformen des Sicherungsseils 11 vereinen alle Vorteile der Erfindung. Die Auswahl der Materialien der Schichten 16 bis 20 verleiht dem Sicherungsseil 11 einen verbesserten Schutz gegen mechanische Einwirkung, wie Sägen, Bolzenschneider, Zerreißen oder von Diamantwerkzeugen und auch eine verbesserte Schnittfestigkeit gegenüber scharfkantigen Gegenständen, wie beispielsweise Messern. Die Kette 21 im Inneren des Sicherungsseils 11 verleiht zusätzliche Schnittfestigkeit. Die Auswahl er Materialien, die für die Herstellung der Gelege, Geflechte oder Gewebe genutzt werden, ermöglicht außerdem einen effektiven Schutz gegen Einwirkung von Hitze, Feuer und Kälte.

### Liste der Bezugszeichen

- 10: Sicherungselement
- 11: Sicherungsseil
- 12, 12': Ösen
- 13: Metallhülse
- 14: Verbindungselement
- 15: Rahmenschloss
- 16: Dekoratives Geflecht
- 17: feuerfestes und schnitthemmendes Geflecht
- 18: feuerfestes Geflecht
- 19: schnittfestes Geflecht
- 20: Multifilamente
- 21: Kette
- 22, 22': Ösen
- 23: Metallische Schicht
- 24: Bolzen
- 25: Schloss
- 26: Schlüssel

## Patentansprüche

1. Sicherungsseil zur Sicherung von Gegenständen, wobei
• das Sicherungsseil drei, vier oder mehr Gelege, Geflechte oder Gewebe aus Fasern oder Garnen aufweist,
• die Geflechte oder Gewebe übereinander angeordnet sind,
**dadurch gekennzeichnet, dass**
• das Sicherungsseil als Kern eine Kette aufweist.

2. Sicherungsseil nach Anspruch 1, **dadurch gekennzeichnet, dass** die Kette von Multifilamenten oder Garnen oder Zwirnen umgeben ist.

3. Sicherungsseil nach Anspruch 1 oder 2, **dadurch gekennzeichnet, dass** die Fasern oder Garne für die Ausbildung der Gelege, Geflechte und/oder Gewebe ausgewählt sind aus Chemiefasern und/oder Naturfasern oder daraus bestehenden Garnen.

4. Sicherungsseil nach Anspruch 3, **dadurch gekennzeichnet, dass** die Chemiefasern ausgewählt sind aus Fasern aus natürlichen Polymeren, Fasern aus synthetischen Polymeren, Fasern aus anorganischen Stoffen und Metallfasern.

5. Sicherungsseil nach einem der vorherigen Ansprüche, **dadurch gekennzeichnet, dass** die Gelege, Geflechte und/oder Gewebe Mischungen oder Kombinationen der Fasern oder Garne gemäß den Ansprüchen 3 bis 4 enthalten.

6. Sicherungsseil nach einem der vorherigen Ansprüche, **dadurch gekennzeichnet, dass** die Kette aus Metall oder einem Verbundwerkstoff besteht.

7. Sicherungsseil nach einem der vorherigen Ansprüche, **dadurch gekennzeichnet, dass** die Kette als Panzerkette oder Ankerkette ausgeführt ist.

8. Sicherungsseil nach einem der vorherigen Ansprüche, **dadurch gekennzeichnet, dass** die Kette für Anwendungen im Bereich Diebstahlschutz eine Stärke von 8 mm oder geringer und für Industrieanwendungen eine Stärke von bis zu 30 mm aufweist.

9. Sicherungsseil nach einem der vorherigen Ansprüche, **dadurch gekennzeichnet, dass** das Sicherungsseil weiterhin eine Ummantelung aufweisen kann, die bevorzugt UV-undurchlässig ausgebildet ist.

10. Sicherungsseil nach einem der vorherigen Ansprüche, **dadurch gekennzeichnet, dass** das Sicherungsseil als äußere Umhüllung ein weiteres Geflecht oder Gewebe aus Fasern oder Garn umfasst, das bedruckt werden kann.

11. Sicherungsseil nach einem der vorherigen Ansprüche, **dadurch gekennzeichnet, dass** zwischen jeder Geflecht- oder Gewebeschicht eine metallische Schicht angeordnet sein kann.

12. Sicherungsseil nach einem der vorherigen Ansprüche, **dadurch gekennzeichnet, dass** die Ummantelung abrasive Stoffe aufweist und/oder dass die Ummantelung ein Kunststoffmaterial, insbesondere Teflon, Acryl und/oder Silikon umfasst.

13. Sicherungsseil nach einem der vorherigen Ansprüche, **dadurch gekennzeichnet, dass** das Sicherungsseil eine wasserabweisende Imprägnierung aufweist, die vorzugsweise auf der äußeren Ummantelung aufgebracht ist.

14. Sicherungsseil nach einem der vorherigen Ansprüche, **dadurch gekennzeichnet, dass** zumindest ein elektrischer Leiter im Sicherungsseil angeordnet ist und Alarmierungsmittel vorgesehen sind, die bei Durchtrennen des elektrischen Leiters eine Alarmierung auslösen.

15. Sicherungsseil nach einem der vorangegangenen Ansprüche, **dadurch gekennzeichnet, dass** das Sicherungsseil an beiden Enden eine Öse und/oder eine Schlaufe aufweist oder dass das Sicherungsseil an einem Ende eine Öse oder Schlaufe aufweist und an dem anderen Ende ein geeignetes Sicherungselement, das in einer Schließ- bzw. Sicherungsvorrichtung arretiert werden kann oder dass das Sicherungsseil an den Enden Teile einer Schließ- bzw. Sicherungsvorrichtung aufweist, die miteinander zusammenwirken.

## Claims

1. Securing rope for securing objects, wherein
- the securing rope comprises three, four or more layers, braids or woven fabrics of fibers or yarns,
- the braids or woven fabrics being arranged one above the other
**characterized in that**
- the securing rope comprises a chain as a core.

2. Securing rope according to claim 1, **characterized in that** the chain is surrounded by multifilaments or yarns or twists.

3. Securing rope according to claim 1 or 2, **characterized in that** the fibers or yarns for the formation of the layers, braids and/or woven fabrics are selected from man-made fibers and/or natural fibers or yarns consisting thereof.

4. Securing rope according to claim 3, **characterized in that** the man-made fibers are selected from fibers of natural polymers, fibers of synthetic polymers, fibers of inorganic polymers, fibers of inorganic materials, and metallic fibers.

5. Securing rope according to one of the preceding claims, **characterized in that** the layers, braids and/or woven fabrics comprise mixtures or combinations of the fibers or yarns according to claims 3 to 4.

6. Securing rope according to one of the preceding claims, **characterized in that** the chain is made of metal or a composite material.

7. Securing rope according to one of the preceding claims, **characterized in that** the chain is designed as armored chain or anchor chain.

8. Securing rope according to one of the preceding claims, **characterized in that** the chain has a thickness of 8 mm or less for anti-theft applications and for industrial applications a thickness of up to 30 mm.

9. Securing rope according to one of the preceding claims, **characterized in that** the securing rope may further comprise a sheathing which is preferably UV-impermeable.

10. Securing rope according to one of the preceding claims, **characterized in that** the securing rope comprises as outer sheathing a further braid or woven fabric of fibers or yarn, which can be printed.

11. Securing rope according to one of the preceding claims, **characterized in that** between each braided or woven fabric layer a metallic layer can be arranged.

12. Securing rope according to one of the preceding claims, **characterized in that** the sheathing comprises abrasive materials and/or that the sheathing comprises a plastic material, in particular Teflon, acrylic and/or silicone.

13. Securing rope according to one of the preceding claims, **characterized in that** the securing rope has a water-repellent impregnation which is preferably applied to the outer sheathing.

14. Securing rope according to one of the preceding claims, **characterized in that** at least one electrical conductor is arranged in the securing rope and alarm means are provided which trigger an alarm when the electrical conductor is severed.

15. Securing rope according to one of the preceding claims, **characterized in that** the securing rope has an eyelet and/or a loop at both ends, or **in that** the securing rope has an eyelet or a loop at one end and a suitable securing element at the other end, which can be locked in a locking or securing device, or **in that** the securing rope has at the ends parts of a locking or securing device which cooperate with each other.

## Revendications

1. Câble de sécurisation pour la sécurisation d'objets,
- le câble de sécurisation comprenant trois, quatre nappes, tresses ou tissus ou plus composés de fibres ou de fils,
- les tresses ou les tissus étant agencés les uns au-dessus des autres,
**caractérisé en ce que**
- le câble de sécurisation comprend une chaîne en tant qu'âme.

2. Câble de sécurisation selon la revendication 1, **caractérisé en ce que** la chaîne est entourée par des multifilaments ou des fils ou des retors.

3. Câble de sécurisation selon la revendication 1 ou 2, **caractérisé en ce que** les fibres ou les fils pour la formation des nappes, des tresses et/ou des tissus sont choisis parmi les fibres chimiques et/ou les fibres naturelles ou les fils constitués de celles-ci.

4. Câble de sécurisation selon la revendication 3, **caractérisé en ce que** les fibres chimiques sont choisies parmi les fibres de polymères naturels, les fibres de polymères synthétiques, les fibres de matières inorganiques et les fibres métalliques.

5. Câble de sécurisation selon l'une quelconque des revendications précédentes, **caractérisé en ce que** les nappes, les tresses et/ou les tissus contiennent des mélanges ou des combinaisons des fibres ou des fils selon les revendications 3 à 4.

6. Câble de sécurisation selon l'une quelconque des revendications précédentes, **caractérisé en ce que** la chaîne est constituée de métal ou d'un matériau composite.

7. Câble de sécurisation selon l'une quelconque des revendications précédentes, **caractérisé en ce que** la chaîne est réalisée sous la forme d'une chaîne de blindage ou d'une chaîne d'ancrage.

8. Câble de sécurisation selon l'une quelconque des revendications précédentes, **caractérisé en ce que** la chaîne présente, pour des applications dans le domaine de la protection antivol, une épaisseur de 8 mm ou moins et, pour des applications industrielles, une épaisseur de jusqu'à 30 mm.

9. Câble de sécurisation selon l'une quelconque des revendications précédentes, **caractérisé en ce que** le câble de sécurisation peut comprendre en outre un enrobage, qui est de préférence configuré sous forme imperméable aux UV.

10. Câble de sécurisation selon l'une quelconque des revendications précédentes, **caractérisé en ce que** le câble de sécurisation comprend, en tant qu'enveloppe extérieure, une tresse ou un tissu supplémentaire de fibres ou de fils, qui peut être imprimé.

11. Câble de sécurisation selon l'une quelconque des revendications précédentes, **caractérisé en ce qu'**une couche métallique peut être agencée entre chaque couche de tresse ou de tissu.

12. Câble de sécurisation selon l'une quelconque des revendications précédentes, **caractérisé en ce que** l'enrobage comprend des matières abrasives et/ou **en ce que** l'enrobage comprend une matière plastique, notamment du Téflon, de l'acrylique et/ou de la silicone.

13. Câble de sécurisation selon l'une quelconque des revendications précédentes, **caractérisé en ce que** le câble de sécurisation comprend une imprégnation hydrofuge, qui est de préférence appliquée sur l'enrobage extérieur.

14. Câble de sécurisation selon l'une quelconque des revendications précédentes, **caractérisé en ce qu'**au moins un conducteur électrique est agencé dans le câble de sécurisation, et des moyens d'alarme sont prévus, qui déclenchent une alarme en cas de sectionnement du conducteur électrique.

15. Câble de sécurisation selon l'une quelconque des revendications précédentes, **caractérisé en ce que** le câble de sécurisation comprend aux deux extrémités un œillet et/ou un passant ou **en ce que** le câble de sécurisation comprend à une extrémité un œillet ou un passant et à l'autre extrémité un élément de sécurisation approprié, qui peut être bloqué dans un dispositif de fermeture ou de sécurisation, ou **en ce que** le câble de sécurisation comprend aux extrémités des parties d'un dispositif de fermeture ou de sécurisation qui coopèrent entre elles.
